# EUROPÄISCHE PATENTSCHRIFT

(11) **EP 3 168 195 B1**
(45) Veröffentlichungstag und Bekanntmachung des Hinweises auf die Patenterteilung: **01.04.2020**
(21) Anmeldenummer: 16198528.8
(22) Anmeldetag: 11.11.2016
(51) Int. Cl.: C02F 1/32, C02F 1/36, C02F 103/20

(54) **ANLAGE UND VERFAHREN ZUM AUFBEREITEN VON FLÜSSIGKEITEN**
ASSEMBLY AND METHOD FOR TREATING LIQUIDS
INSTALLATION ET PROCÉDÉ DE TRAITEMENT DE LIQUIDES

(30) Priorität: 13.11.2015 DE 202015106164 U; 13.11.2015 DE 102015222492
(43) Veröffentlichungstag der Anmeldung: 17.05.2017
(73) Patentinhaber: Mundus Fluid AG, 28355 Bremen (DE)
(72) Erfinder: Riggers, Wolfgang, 28355 Bremen (DE); Kiene, Bernd, 49377 Vechta (DE)
(74) Vertreter: Eisenführ Speiser

(56) Entgegenhaltungen:
- EP-A1- 2 689 790
- WO-A1-2015/010219
- DE-A1-102013 114 889
- US-A1- 2012 279 926

## Beschreibung

Die Erfindung betrifft eine Anlage zum Aufbereiten von Flüssigkeiten, nämlich von Trinkwasser, mit einem Flüssigkeitseinlass und zumindest einem Flüssigkeitsauslass und einem Entkeimungsgerät zum Entkeimen einer Flüssigkeit, wobei das Entkeimungsgerät fluidleitend mit dem Flüssigkeitseinlass und dem zumindest einen Flüssigkeitsauslass verbunden ist.

Die Erfindung betrifft ferner ein Gebäude, insbesondere für die Tierhaltung, mit einer Anlage zum Aufbereiten von Flüssigkeiten.

Zusätzlich betrifft die Erfindung ein Verfahren zum Aufbereiten von Flüssigkeiten, nämlich von Trinkwasser, mit dem Schritt: Entkeimen einer Flüssigkeit, vorzugsweise mittels eines Entkeimungsgeräts.

Die europäische Patentanmeldung EP 2 689 790 A1 offenbart eine RO-Anlage mit einem RO-Filtermodul, das durch eine Membran in einen Primärraum und einen Sekundärraum unterteilt ist. Die RO-Anlage umfasst zudem einen atmosphärisch belüfteten Vorlaufbehälter, in den eine Rohwasserzuflussleitung einmündet, wobei von dem unteren Ende des Vorlaufbehälters eine Leitung, in die eine Pumpe eingeschaltet ist, zu dem Primärraum führt. Von dem Primärraum führt eine Konzentratleitung weg, und von dem Sekundärraum geht eine Permeatversorgungsleitung aus, an die mittels einer Stichleitung ein Dialysegerät angeschlossen ist. In Strömungsrichtung hinter dem Dialysegerät führt eine Permeatrücklaufleitung zu dem Vorlaufbehälter zurück, wobei in die Permeatrücklaufleitung eine Zirkulationspumpe und ein elektrochemischer Ozongenerator eingeschaltet sind.

Die deutsche Offenlegungsschrift DE 10 2013 114 889 A1 offenbart eine Zirkulationseinrichtung für Trink- oder Betriebswasser mit einem Speicherbehälter, einer mit dem Speicherbehälter in Verbindung stehenden Zirkulationsleitung, einer mit dem Speicherbehälter in Verbindung stehenden Wasserbehandlungseinrichtung zur Behandlung des Trink- oder Betriebswassers und einer Zirkulationspumpe zur Umwälzung des Wassers in der Zirkulationsleitung. Die Zirkulationsleitung ist mit einer in Bezug auf die Zirkulationsleitung örtlich begrenzten Senke gekoppelt, durch die wenigstens ein Teil des in der Zirkulationsleitung umgewälzten Wassers geleitet wird, um in dem Wasser enthaltene Mikroorganismen und/oder deren Nährstoffe in der Senke zu sammeln, wobei die Senke eine Einrichtung zum Abtöten und/oder eine Einrichtung zum Austragen der in der Senke gesammelten Mikroorganismen und/oder deren Nährstoffe enthält.

Die Patentanmeldung US 2012/0279926 A1 offenbart eine Vorrichtung zum Behandeln von Flüssigkeiten. Die Vorrichtung umfasst ein erstes Filtermodul mit einem Filter, einem Einlass für eine Flüssigkeit, einen ersten Auslass für eine Flüssigkeit und einem zweiten Auslass für eine gefilterte Flüssigkeit. Der Einlass und der erste Auslass sind auf einer ersten Seite des Filters angeordnet und der zweite Auslass ist auf einer zweiten Seite des Filters angeordnet. Die Vorrichtung umfasst des Weiteren ein Ultraviolett-Behandlungsmodul mit einer ersten Ultraviolett-Strahlenquelle, wobei das erste Ultraviolett-Behandlungsmodul mit dem ersten Ausgang des Filtermoduls verbunden ist und angepasst ist, Flüssigkeit von dem Filtermodul zu empfangen. Das erste Ultraviolett-Behandlungsmodul bestrahlt die empfangene Flüssigkeit mit ultravioletter Strahlung der ersten Ultraviolett-Strahlenquelle. Die Vorrichtung umfasst zudem ein zweites Ultraviolett-Behandlungsmodul mit einer zweiten Ultraviolett-Strahlenquelle, wobei das zweite Ultraviolett-Behandlungsmodul mit dem zweiten Auslass des Filtermoduls verbunden ist und angepasst ist, die gefilterte Flüssigkeit von dem Filtermodul zu empfangen. Das zweite Ultraviolett-Behandlungsmodul bestrahlt diese Flüssigkeit mit ultravioletter Strahlung von der zweiten Ultraviolett-Strahlenquelle.

Die internationale Patentanmeldung WO 2015/010219 A1 offenbart eine Vorrichtung zum Behandeln von Wasser. Das Wasser wird mittels einer ersten Pumpe in einen ersten Kreislauf eingeführt, der eine Antiblockiereinrichtung umfasst. Eine Osmoseeinheit ist stromabwärts von der Antiblockiereinrichtung angeordnet, wobei gereinigtes Wasser, das von der Osmoseeinheit geliefert wird, mittels einer zweiten Pumpe in einem Sammeltank gesammelt wird. Verunreinigte Wasser, das von der Osmoseeinheit abgegeben wird, wird gefiltert, abgegossen und wieder dem ersten Kreislauf der ersten Pumpe zugeführt. Das gereinigte Wasser, das in dem Sammeltank gesammelt wird, wird schließlich einem zweiten Kreislauf zugeführt, das ein Gebäude mit Wasser versorgt.

Anlagen und Verfahren zum Aufbereiten von Trinkwasser kommen beispielsweise zum Einsatz, um kontinuierlich keimfreies oder zumindest keimarmes Trinkwasser bereitstellen zu können. Insbesondere in der Tierhaltung besteht ein hoher Bedarf an gesundheitsverträglichem Trinkwasser, welches den Tieren, wie beispielsweise Schweinen oder Rindern, in entsprechenden Tierställen bereitgestellt werden kann.

Derartige Tierställe verfügen üblicherweise über einen Zugang zu einer Trinkwasserversorgung. Das Trinkwasser wird in bekannten Anlagen von der Trinkwasserversorgung durch ein Leitungssystem zu einer oder mehreren Entnahmestellen innerhalb des Tierstalls gefördert, an welchen die Tiere das Trinkwasser aufnehmen können.

Bekannte Anlagen zur Aufbereitung von Trinkwasser weisen zwischen einem Flüssigkeitseinlass und zumindest einem Flüssigkeitsauslass ein Entkeimungsgerät zum Entkeimen des Trinkwassers auf, wobei das Entkeimungsgerät fluidleitend mit dem Flüssigkeitseinlass und dem zumindest einen Flüssigkeitsauslass verbunden ist. Bei den bekannten Anlagen zur Aufbereitung von Trinkwasser bildet sich nur dann eine Flüssigkeitsströmung innerhalb der Anlage aus, wenn Flüssigkeit aus dem zumindest einen Flüssigkeitsauslass aus der Anlage entnommen wird.

Aufgrund verschiedener Umstände, beispielsweise des Biorhythmus der in den jeweiligen Tierställen befindlichen Tiere oder der vordefinierten Fütterungszeiten, wird in der Praxis oftmals über einen längeren Zeitraum kein Trinkwasser aus der Anlage entnommen, so dass das in der Anlage befindliche Trinkwasser nicht gefördert wird und somit still steht.

Es hat sich gezeigt, dass bei ausbleibender Flüssigkeitsströmung innerhalb der Anlage eine Keimbildung stattfindet, welche zu einer nachträglichen Verunreinigung des Trinkwassers innerhalb der Anlage führt. Dies kann beispielsweise auf Korrosionsrückstände an Leitungsbewandungen zurückgeführt werden. Es hat sich gezeigt, dass sich die Keimmenge bei ausbleibender Strömung innerhalb von kurzer Zeit, bei einigen Keimarten innerhalb von 10 bis 12 Minuten, verdoppeln kann. Dies bedeutet, dass es trotz einer geringen Keimmenge innerhalb des aufzubereitenden Trinkwassers bereits nach kurzer Zeit zu einer erheblichen Verunreinigung des Trinkwassers kommen kann, wenn eine Flüssigkeitsströmung innerhalb der Anlage ausbleibt.

Dies hat zur Folge, dass das aus der Anlage entnommene Trinkwasser - trotz Aufbereitung des Trinkwassers mittels eines Entkeimungsgeräts - verunreinigt sein kann, wenn sich innerhalb der Anlage über einen längeren Zeitraum keine Strömung ausgebildet hat.

Aufgabe der vorliegenden Erfindung ist es folglich, eine Lösung bereitzustellen, welche eine verbesserte Aufbereitung von Flüssigkeiten, nämlich von Trinkwasser erlaubt.

Die der Erfindung zugrundeliegende Aufgabe wird in einem ersten Aspekt durch eine Anlage zum Aufbereiten von Flüssigkeiten, nämlich von Trinkwasser, gemäß dem Anspruch 1 gelöst. Die Anlage umfasst einen Flüssigkeitskreislauf, in welchem das Entkeimungsgerät angeordnet ist.

Die Erfindung macht sich die Erkenntnis zunutze, dass durch einen Flüssigkeitskreislauf eine kontinuierliche Strömung innerhalb der Anlage herbeigeführt wird und somit eine nachträgliche Verunreinigung durch ein Ausbleiben der Strömung innerhalb der Anlage vermieden wird.

Die Anlage zum Aufbereiten von Flüssigkeiten umfasst eine Pumpe, wobei die Pumpe dazu eingerichtet ist, Flüssigkeit innerhalb der Anlage zu fördern.

Die Pumpe ist innerhalb des Flüssigkeitskreislaufs angeordnet. Die Pumpe ist hinsichtlich ihrer Fördereigenschaften, wie beispielsweise dem Volumen- oder Massenstrom, einstellbar. Durch eine derartige Pumpe kann die Zirkulation der Flüssigkeit innerhalb des Flüssigkeitskreislaufs gesteuert werden. Auf diese Weise kann also eine Anpassung der Flüssigkeitsströmung erfolgen, welche auf die Größe der Anlage oder die verwendeten Komponenten abgestimmt ist. Beispielsweise weist das Entkeimungsgerät eine maximalzulässige Strömungsgeschwindigkeit oder einen maximal-zulässigen Volumen- oder Massenstrom auf, um einen gewissen Entkeimungsgrad gewährleisten zu können. Beispielsweise kann die Strömung somit mittels der Pumpe an die Eigenschaften des Entkeimungsgeräts angepasst werden.

Der Flüssigkeitseinlass ist außerhalb des Flüssigkeitskreislaufs angeordnet. Dies erlaubt eine Erweiterung der Anlage um zusätzliche Komponenten, beispielsweise um eine Direktversorgungsleitung, über welche dem zumindest einen Flüssigkeitsauslass auch bei einer Funktionsstörung des Flüssigkeitskreislaufs Flüssigkeit bereitgestellt werden kann.

Der Flüssigkeitskreislauf weist die Mischeinrichtung auf, welche fluidleitend mit dem Flüssigkeitseinlass verbunden ist. In der Mischeinrichtung wird folglich bereits aufbereitete Flüssigkeit, welche innerhalb des Flüssigkeitskreislaufs zirkuliert, mit noch aufzubereitender Flüssigkeit, welche durch den Flüssigkeitseinlass der Anlage zugeführt wird, gemischt. Findet ein Zulauf noch aufzubereitender Flüssigkeit aus dem Flüssigkeitseinlass statt, steigt der Verunreinigungsgrad der Flüssigkeit, welche sich innerhalb des Flüssigkeitskreislaufs befindet, an. Aufgrund der kontinuierlichen Zirkulation der Flüssigkeit innerhalb des Flüssigkeitskreislaufs kommt es jedoch nach der Vermischung von aufbereiteter und noch aufzubereitender Flüssigkeit wieder zu einer Absenkung des Verunreinigungsgrades, da mittels des Entkeimungsgeräts eine kontinuierliche Entkeimung der Flüssigkeit stattfindet. Die Pumpe ist zwischen dem zumindest einen Flüssigkeitsauslass und der Mischeinrichtung angeordnet, um die Flüssigkeit von dem zumindest einen Flüssigkeitsauslass zu der Mischeinrichtung zu pumpen.

Die Mischeinrichtung umfasst einen Mischbehälter, welcher zwei Behältereinlässe und einen Behälterauslass aufweist. Ein Behältereinlass und der Behälterauslass sind fluidleitend mit dem Flüssigkeitskreislauf verbunden und erlauben somit eine kontinuierliche Zirkulation der Flüssigkeit innerhalb des Flüssigkeitskreislaufs. Ein Behältereinlass ist fluidleitend mit dem Flüssigkeitseinlass der Anlage verbunden und erlaubt somit den Zulauf noch aufzubereitender Flüssigkeit in den Flüssigkeitskreislauf.

In einer bevorzugten Ausführungsform der erfindungsgemäßen Anlage ist zwischen dem Flüssigkeitseinlass der Anlage und der Mischeinrichtung ein Zulaufventil angeordnet. Das Zulaufventil ist vorzugsweise dazu eingerichtet, den Zulauf der Flüssigkeit in die Mischeinrichtung in Abhängigkeit eines herrschenden Druckniveaus und/oder in Abhängigkeit des Füllstandes des Mischbehälters der Mischeinrichtung zu steuern. Vorzugsweise ist innerhalb des Mischbehälters ein Schwimmer angeordnet, welcher mit dem Zulaufventil gekoppelt ist. Mittels des Schwimmers kann der Füllstand des Behälters ermittelt werden, so dass auf Grundlage des Füllstandes des Behälters das Zulaufventil gesteuert werden kann. Vorzugsweise umfasst die Steuerung des Zulaufventils das Öffnen, Schließen und das Einstellen des Zulaufventils hinsichtlich der maximal möglichen Durchflussrate durch das Zulaufventil. Die Kopplung zwischen dem Schwimmer und dem Zulaufventil ist vorzugsweise mechanisch und/oder elektrisch ausgebildet.

In einer vorteilhaften Ausführungsform der erfindungsgemäßen Anlage ist innerhalb des Flüssigkeitskreislaufs eine zweite Pumpe angeordnet. Vorzugsweise ist die zweite Pumpe zwischen der Mischeinrichtung und dem Entkeimungsgerät angeordnet. Durch die zweite Pumpe wird einerseits das Risiko eines Funktionsausfalls der Anlage verringert und andererseits eine weitere Möglichkeit geschaffen, die Strömungseigenschaften der zirkulierenden Flüssigkeit innerhalb des Flüssigkeitskreislaufs einzustellen.

Die erfindungsgemäße Anlage wird ferner dadurch vorteilhaft weitergebildet, dass das Entkeimungsgerät eine Selbstreinigungseinrichtung umfasst. Durch die Selbstreinigungseinrichtung wird der Wartungsaufwand erheblich verringert, da die Entsorgung von Reinigungsrückständen oder das Austauschen von verunreinigten Reinigungskomponenten, wie beispielsweise Filtern, entfällt. Die Anlage kann somit wirtschaftlicher betrieben werden und eine Beschädigung der Anlage durch unsachgemäße oder nichtdurchgeführte Wartungsarbeiten wird vermieden.

Das Entkeimungsgerät weist einen oder mehrere Strahlungserzeuger auf, welche dazu eingerichtet sind, die Flüssigkeit mit ultravioletter Strahlung zu bestrahlen. Durch den Strahlungseintrag in die aufzubereitende Flüssigkeit kommt es zur Keimabtötung und somit zu einer Verringerung der Flüssigkeitsverunreinigung.

In einer besonders bevorzugten Ausführungsform der erfindungsgemäßen Anlage ist der eine oder sind die mehreren Strahlungserzeuger dazu eingerichtet, eine ultraviolette Strahlung mit einer Wellenlänge im Bereich von 156 bis 300 nm zu erzeugen. Dieser Wellenlängenbereich ist besonders geeignet um Mikroorganismen zu schädigen oder abzutöten. Besonders bevorzugt ist eine Anlage, bei welcher der eine oder die mehreren Strahlungserzeuger dazu eingerichtet sind, eine ultraviolette Strahlung mit einer Wellenlänge von 253,7 nm zu erzeugen.

Das Entkeimungsgerät weist auch einen oder mehrere Ultraschallerzeuger auf, welche dazu eingerichtet sind, die Flüssigkeit mit Ultraschall zu bestrahlen. In einer Ausführungsform umfasst das Entkeimungsgerät eine Selbstreinigung, ein oder mehrere Strahlungserzeuger zum Erzeugen ultravioletter Strahlung und ein oder mehrere Ultraschallerzeuger zum Erzeugen von Ultraschall. Das Entkeimungsgerät kann demnach angepasst sein, die Flüssigkeit mittels einer Einheit zur Selbstreinigung, mittels ultravioletter Strahlung und mittels Ultraschall zu reinigen.

Der zumindest eine Flüssigkeitsauslass ist innerhalb des Flüssigkeitskreislaufs angeordnet. Durch die Anordnung des zumindest einen Flüssigkeitsauslasses innerhalb des Flüssigkeitskreislaufs wird die Flüssigkeit, welche aus dem zumindest einen Flüssigkeitsauslass aus der Anlage abgeführt wird, direkt aus der kontinuierlich zirkulierenden Flüssigkeit entnommen. Auf diese Weise weist die aus dem zumindest einen Flüssigkeitsauslass austretende Flüssigkeit mit hoher Sicherheit einen hohen Entkeimungsgrad auf.

Vor dem zumindest einen Flüssigkeitsauslass ist ein Druckregler angeordnet. Alternativ oder zusätzlich ist hinter dem zumindest einen Flüssigkeitsauslass ein Druckregler angeordnet. Durch das Anordnen von Druckreglern vor und hinter dem zumindest einen Flüssigkeitsauslass kann das Druckniveau der durch den zumindest einen Flüssigkeitsauslass austretenden Flüssigkeit weitestgehend unabhängig von den Druckzuständen in den übrigen Abschnitten der Anlage gesteuert werden. Der zumindest eine Flüssigkeitsauslass ist vorzugsweise mit ein oder mehreren Flüssigkeitsentnahmeeinrichtungen verbunden, welche auf die mit Flüssigkeit zu versorgende Tierart angepasst sind. Durch die Druckregler vor und hinter dem zumindest einen Flüssigkeitsauslass kann die Anlage somit an verschiedene Flüssigkeitsentnahmeeinrichtungen für verschiedene Tierarten angepasst werden. Vorzugsweise weist die Anlage im Bereich des zumindest einen Flüssigkeitsauslasses eine Druckanzeige, insbesondere eine Unterdruckanzeige auf, welche dazu eingerichtet ist, das momentan herrschende Druckniveau im Bereich des zumindest einen Flüssigkeitsauslasses optisch anzuzeigen. Eine weitere bevorzugte Ausführungsform der erfindungsgemäßen Anlage weist mehrere in Reihe angeordnete Flüssigkeitsauslässe auf. Insbesondere bei der Verwendung der Anlage in großen Tierställen, in welchen einer Vielzahl von Tieren Flüssigkeit bereitgestellt werden muss, besteht die Notwendigkeit von mehreren Flüssigkeitsauslässen, welche an verschiedenen Positionen des Tierstalls angeordnet sind.

Die erfindungsgemäße Anlage wird ferner dadurch vorteilhaft weitergebildet, dass innerhalb des Flüssigkeitskreislaufs ein Durchflussmesser angeordnet ist. Der Durchflussmesser dient zur Funktionsprüfung der Anlage und ist vorzugsweise dazu eingerichtet, den Volumenstrom oder den Massenstrom der innerhalb des Flüssigkeitskreislaufs zirkulierenden Flüssigkeit optisch anzuzeigen.

Die der Erfindung zugrundeliegende Aufgabe wird ferner durch ein Gebäude, insbesondere für die Tierhaltung, gelöst, wobei das Gebäude eine Anlage zum Aufbereiten von Flüssigkeiten, nämlich von Trinkwasser, aufweist, welche gemäß einer der vorstehend beschriebenen Ausführungsformen ausgebildet ist.

Hinsichtlich der Vorteile des erfindungsgemäßen Gebäudes wird auf die Vorteile der erfindungsgemäßen Anlage verwiesen.

Die der Erfindung zugrundeliegende Aufgabe wird ferner durch ein Verfahren gemäß Anspruch 5 gelöst, wobei das Entkeimen der Flüssigkeit, das heißt des Trinkwassers, innerhalb eines Flüssigkeitskreislaufs erfolgt.

Hinsichtlich der Vorteile des erfindungsgemäßen Verfahrens wird auf die Vorteile der erfindungsgemäßen Anlage verwiesen.

Das erfindungsgemäße Verfahren umfasst den Schritt:
- Fördern der Flüssigkeit mittels einer Pumpe.

Die Pumpe ist innerhalb des Flüssigkeitskreislaufs angeordnet.

Das Entkeimungsgerät ist fluidleitend mit einem Flüssigkeitseinlass und zumindest einem Flüssigkeitsauslass verbunden, wobei der Flüssigkeitseinlass außerhalb des Flüssigkeitskreislaufs angeordnet ist.

Das erfindungsgemäße Verfahren umfasst den Schritt:
- Mischen von entkeimter Flüssigkeit und nicht entkeimter Flüssigkeit in einer Mischeinrichtung innerhalb des Flüssigkeitskreislaufs.

Die Mischeinrichtung umfasst einen Mischbehälter, welcher zwei Behältereinlässe und einen Behälterauslass aufweist, wobei ein Behältereinlass und der Behälterauslass fluidleitend mit dem Flüssigkeitskreislauf verbunden sind und ein Behältereinlass fluidleitend mit dem Flüssigkeitseinlass der Anlage verbunden ist.

Vorzugsweise wird das erfindungsgemäße Verfahren ferner durch den folgenden Schritt weitergebildet:
- Steuern des Zulaufs von nicht-entkeimter Flüssigkeit in die Mischeinrichtung, vorzugsweise in Abhängigkeit des Füllstandes des Mischbehälters der Mischeinrichtung.

Vorzugsweise ist innerhalb des Flüssigkeitskreislaufs zwischen der Mischeinrichtung und dem Entkeimungsgerät eine zweite Pumpe angeordnet. Vorzugsweise umfasst das Entkeimungsgerät eine Selbstreinigungseinrichtung.

Der zumindest eine Flüssigkeitsauslass ist innerhalb des Flüssigkeitskreislaufs angeordnet und vor dem zumindest einen Flüssigkeitsauslass ist ein Druckregler und/oder hinter dem zumindest einen Flüssigkeitsauslass ist ein Druckregler angeordnet.

Das erfindungsgemäße Verfahren kann ferner durch den folgenden Schritt weitergebildet sein:
- Messen des Durchflusses innerhalb des Flüssigkeitskreislaufs.

Weitere Vorteile, Merkmale und Einzelheiten der Erfindung ergeben sich aus der nachfolgenden Beschreibung der bevorzugten Ausführungsformen sowie anhand der folgenden Figuren. Im Einzelnen zeigen:
- Fig. 1: ein Beispiel in einer schematischen Darstellung, das das Verständnis der Erfindung erleichtert; und
- Fig.2: ein Ausführungsbeispiel der erfindungsgemäßen Anlage in einer schematischen Darstellung.

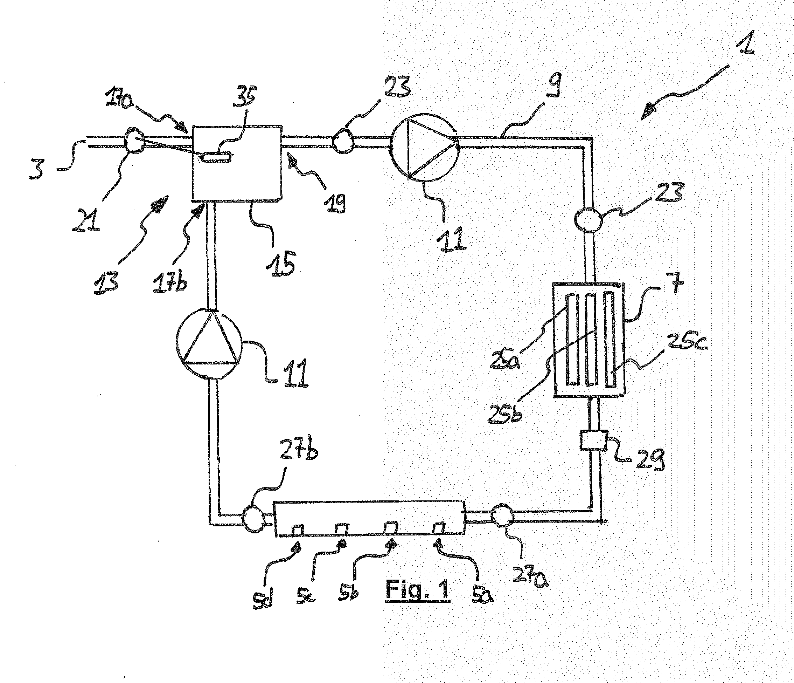

Die Anlage 1 gemäß Fig. 1 wird zum Aufbereiten von Flüssigkeiten, nämlich von Trinkwasser, verwendet. Die Anlage 1 weist einen Flüssigkeitseinlass 3 auf, durch welchen noch aufzubereitendes Trinkwasser in die Anlage eingeleitet wird. Das eingeleitete, noch aufzubereitende Trinkwasser wird über ein Zulaufventil 21 in einen Mischbehälter 15 einer Mischeinrichtung 13 geleitet. Die Mischeinrichtung 13 ist Teil eines Flüssigkeitskreislaufs 9, in welchem Trinkwasser kontinuierlich zirkuliert.

Der Mischbehälter 15 der Mischeinrichtung 13 weist demnach zwei Behältereinlässe 17a, 17b und einen Behälterauslass 19 auf, wobei der Behältereinlass 17a fluidleitend mit dem Flüssigkeitseinlass 3 verbunden ist und der Behältereinlass 17b und der Behälterauslass 19 fluidleitend mit dem übrigen Flüssigkeitskreislauf 9.

Der Flüssigkeitskreislauf 9 weist ferner zwei Pumpen 11, ein Entkeimungsgerät 7 und vier Flüssigkeitsauslässe 5a - 5d auf.

Das Entkeimungsgerät 7 ist zum Entkeimen des verunreinigten Trinkwassers ausgebildet und über die Mischeinrichtung 13 fluidleitend mit dem Flüssigkeitseinlass 3 verbunden. Das Entkeimungsgerät 7 umfasst eine Selbstreinigungseinrichtung und weist mehrere Strahlungserzeuger 25a - 25c auf, welche dazu eingerichtet sind, das Trinkwasser mit ultravioletter Strahlung zu bestrahlen. Die drei Strahlungserzeuger 25a - 25c sind dazu eingerichtet, eine ultraviolette Strahlung mit einer Wellenlänge im Bereich von 156 bis 300 nm zu erzeugen. Zudem kann das Entkeimungsgerät 7 einen oder mehrere Ultraschallerzeuger aufweisen, welche dazu eingerichtet sind, die Flüssigkeit mit Ultraschall zu bestrahlen.

Die Pumpen 11 sind dazu eingerichtet, das Trinkwasser innerhalb des Flüssigkeitskreislaufs 9 zu fördern, sodass eine kontinuierliche Zirkulation des Trinkwassers innerhalb des Flüssigkeitskreislaufs 9 herbeigeführt wird.

Der Flüssigkeitskreislauf 9 umfasst ferner zwei weitere Ventile 23, welche zum Einstellen des Druckniveaus und der innerhalb des Flüssigkeitskreislaufs 9 ausgebildeten Strömung dienen.

Vor den vier Flüssigkeitsauslässen 5a - 5d und hinter den vier Flüssigkeitsauslässen 5a - 5d ist jeweils ein Druckregler 27a, 27b angeordnet, mittels welchen ein geeignetes Druckniveau im Bereich der Flüssigkeitsauslässe 5a - 5d einstellbar ist.

Zur Funktionsüberwachung der Anlage 1 ist innerhalb des Flüssigkeitskreislaufs 9 ein Durchflussmesser 29 angeordnet.

Der Flüssigkeitseinlass 3 ist außerhalb des Flüssigkeitskreislaufs 9 angeordnet, wobei zwischen dem Flüssigkeitseinlass 3 und der Mischeinrichtung 13 ein Zulaufventil 21 angeordnet ist. Das Zulaufventil 21 weist einen Schwimmer 35 auf, welcher mechanisch mit dem Zulaufventil 21 gekoppelt ist. Mittels des Schwimmers 35 kann der Füllstand des Mischbehälters 15 der Mischeinrichtung 13 überwacht und das Zulaufventil 21 in Abhängigkeit des Füllstands des Mischbehälters 15 gesteuert werden.

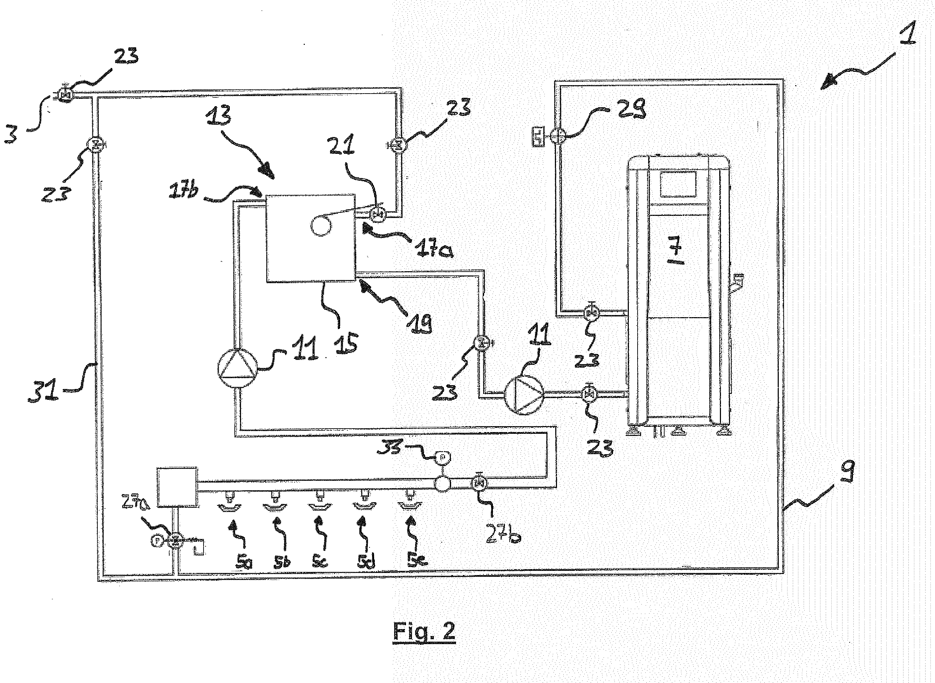

Das in Fig. 2 gezeigte Ausführungsbeispiel der erfindungsgemäßen Anlage 1 weist ebenfalls einen Flüssigkeitskreislauf 9 auf, in welchem eine Mischeinrichtung 13, ein Entkeimungsgerät 7, insgesamt fünf Flüssigkeitsauslässe 5a - 5e und zwei Pumpen 11 angeordnet sind. Ferner sind innerhalb des Flüssigkeitskreislaufs 9 zusätzlich zwei Ventile 23, ein Durchflussmesser 29 sowie zwei Druckregler 27a, 27b angeordnet, wobei der Druckregler 27a vor den Flüssigkeitsauslässen 5a - 5e und der Druckregler 27b hinter den Flüssigkeitsauslässen 5a - 5e angeordnet ist. Ferner weist der Flüssigkeitskreislauf 9 eine Druckanzeige 33 im Bereich der Flüssigkeitsauslässe 5a - 5e auf.

Der Flüssigkeitseinlass 3 ist einerseits über das Zulaufventil 21 mit dem Mischbehälter 15 der Mischeinrichtung 13 und andererseits über eine Direktleitung 31 mit den fünf Flüssigkeitsauslässen 5a - 5e verbunden. Im Falle eines Ausfalls des Flüssigkeitskreislaufs 9 können die Flüssigkeitsauslässe 5a - 5e somit über die Direktleitung 31 direkt mit Flüssigkeit, beispielsweise mit Trinkwasser, versorgt werden.

Die Erfindung betrifft eine Anlage zum Aufbereiten von Flüssigkeiten mit einem Flüssigkeitskreislauf, der zumindest einen Flüssigkeitsauslass, ein Entkeimungsgerät, eine Mischeinrichtung und eine Pumpe aufweist. Vor und/oder hinter dem zumindest einen Flüssigkeitsauslass ist ein Druckregler angeordnet, wobei die Pumpe die Flüssigkeit von dem zumindest einen Flüssigkeitsauslass zu der Mischeinrichtung pumpt. Die Mischeinrichtung umfasst einen Mischbehälter, welcher zwei Behältereinlässe und einen Behälterauslass aufweist, wobei ein Behältereinlass und der Behälterauslass fluidleitend mit dem Flüssigkeitskreislauf verbunden sind und ein Behältereinlass fluidleitend mit einem Flüssigkeitseinlass verbunden ist, der sich außerhalb des Flüssigkeitskreislaufs befindet.

### Bezugszeichenliste

- 1: Anlage zum Aufbereiten von Trinkwasser
- 3: Flüssigkeitseinlass
- 5a-5e: Flüssigkeitsauslässe
- 7: Entkeimungsgerät
- 9: Flüssigkeitskreislauf
- 11: Pumpe
- 13: Mischeinrichtung
- 15: Mischbehälter
- 17a, 17b: Behältereinlässe
- 19: Behälterauslass
- 21: Zulaufventil
- 23: Ventil
- 25a-25c: Strahlungserzeuger
- 27a, 27b: Druckregler
- 29: Durchflussmesser
- 31: Direktleitung
- 33: Druckanzeige
- 35: Schwimmer

## Patentansprüche

1. Anlage (1) zum Aufbereiten von Trinkwasser mit
einem Flüssigkeitseinlass (3) und zumindest einem Flüssigkeitsauslass (5a-5e), wobei vor dem zumindest einen Flüssigkeitsauslass (5a-5e) ein Druckregler (27a) und/oder hinter dem zumindest einen Flüssigkeitsauslass (5a-5e) ein Druckregler (27b) angeordnet ist,
einem Entkeimungsgerät (7) zum Entkeimen von Trinkwasser, wobei das Entkeimungsgerät (7) fluidleitend mit dem Flüssigkeitseinlass (3) und dem zumindest einen Flüssigkeitsauslass (5a-5e) verbunden ist, **gekennzeichnet durch**
einen Flüssigkeitskreislauf (9), in welchem das Entkeimungsgerät (7) angeordnet ist, wobei der Flüssigkeitskreislauf (9) eine Mischeinrichtung (13) aufweist, wobei die Mischeinrichtung (13) einen Mischbehälter (15) umfasst, welcher zwei Behältereinlässe (17a, 17b) und einen Behälterauslass (19) aufweist, wobei ein Behältereinlass (17b) und der Behälterauslass (19) fluidleitend mit dem Flüssigkeitskreislauf (9) verbunden sind und ein Behältereinlass (17a) fluidleitend mit dem Flüssigkeitseinlass (3) der Anlage (1) verbunden ist, und wobei der zumindest eine Flüssigkeitsauslass (5a-5e) innerhalb des Flüssigkeitskreislaufs (9) und der Flüssigkeitseinlass (3) außerhalb des Flüssigkeitskreislaufs (9) angeordnet ist, wobei das Entkeimungsgerät (7) über die Mischeinrichtung (13) fluidleitend mit dem Flüssigkeitseinlass (3) verbunden ist, so dass das Entkeimungsgerät (7) eine Mischung aus bereits aufbereitetem Trinkwasser, welches innerhalb des Flüssigkeitskreislaufs (9) zirkuliert, mit noch aufzubereitendem Trinkwasser, welches durch den Flüssigkeitseinlass (3) der Anlage zugeführt wird, entkeimt, wobei das Entkeimungsgerät (7) einen oder mehrere Ultraschallerzeuger, welche dazu eingerichtet sind, die Mischung mit Ultraschall zu bestrahlen, und einen oder mehrere Strahlungserzeuger (25a-25c) aufweist, welche dazu eingerichtet sind, die Mischung mit ultravioletter Strahlung mit einer Wellenlänge im Bereich von 156 bis 300 nm zu bestrahlen, wobei der Flüssigkeitseinlass (3) über eine Direktleitung (31) mit dem zumindest einen Flüssigkeitsauslass (5a-5e) verbunden ist, wobei zwischen dem Flüssigkeitseinlass (3) der Anlage (1) und der Mischeinrichtung (13) ein Zulaufventil (21) angeordnet ist, und
eine Pumpe (11), welche dazu eingerichtet ist, Flüssigkeit innerhalb der Anlage (1) zu fördern und innerhalb des Flüssigkeitskreislaufs (9) angeordnet ist, wobei die Pumpe (11) zwischen dem zumindest einen Flüssigkeitsauslass (5a-5e) und der Mischeinrichtung (13) angeordnet ist, um das Trinkwasser von dem zumindest einen Flüssigkeitsauslass (5a-5e) zu der Mischeinrichtung (13) zu pumpen, wobei die Pumpe (11) hinsichtlich des Volumen- und Massenstroms einstellbar ist.

2. Anlage (1) nach dem vorstehenden Anspruch,
**dadurch gekennzeichnet, dass** das Entkeimungsgerät (7) eine Selbstreinigungseinrichtung umfasst.

3. Gebäude, insbesondere für die Tierhaltung,
**dadurch gekennzeichnet, dass** das Gebäude eine Anlage (1) zum Aufbereiten von Trinkwasser aufweist, welche gemäß einem der vorstehenden Ansprüche ausgebildet ist.

4. Verfahren zum Aufbereiten von Trinkwasser mittels einer Anlage (1) gemäß dem Anspruch 1 mit folgenden Schritten:
- Fördern des Trinkwassers mittels der Pumpe (11) der Anlage (1) innerhalb des Flüssigkeitskreislaufs (9) von dem zumindest einem Flüssigkeitsauslass (5a-5e) der Anlage (1) zu der Mischeinrichtung (13) der Anlage (1), wobei die Mischeinrichtung (13) den Mischbehälter (15) umfasst, welcher die zwei Behältereinlässe (17a, 17b) und den Behälterauslass (19) aufweist, wobei ein Behältereinlass (17b) und der Behälterauslass (19) fluidleitend mit dem Flüssigkeitskreislauf (9) verbunden sind und ein Behältereinlass (17a) fluidleitend mit dem Flüssigkeitseinlass (3) der Anlage (1) verbunden ist, wobei die Pumpe (11) zwischen dem zumindest einen Flüssigkeitsauslass (5a-5e) und der Mischeinrichtung (13) angeordnet ist und das Trinkwasser von dem zumindest einen Flüssigkeitsauslass (5a-5e) zu der Mischeinrichtung (13) pumpt, wobei die Pumpe (11) hinsichtlich des Volumen- und Massenstroms einstellbar ist,
- Mischen von entkeimtem Trinkwasser und nicht-entkeimtem Trinkwasser in der Mischeinrichtung (13) der Anlage (1) innerhalb des Flüssigkeitskreislaufs (9),
- Entkeimen von Trinkwasser mittels des Entkeimungsgeräts (7) der Anlage (1), wobei das Entkeimen des Trinkwassers innerhalb des Flüssigkeitskreislaufs (9) der Anlage (1) erfolgt, wobei das Entkeimungsgerät (7) die Mischung aus bereits entkeimten Trinkwasser, welches innerhalb des Flüssigkeitskreislaufs (9) zirkuliert, und nicht-entkeimtem Trinkwasser, welches durch den Flüssigkeitseinlass (3) der Anlage zugeführt wird, entkeimt, wobei die Mischung mit Ultraschall und mit ultravioletter Strahlung mit einer Wellenlänge im Bereich von 156 bis 300 nm bestrahlt wird,
- Regeln des Drucks innerhalb des Flüssigkeitskreislaufs (9) mittels eines vor dem zumindest einen Flüssigkeitsauslass (5a-5e) angeordneten Druckreglers (27a) der Anlage (1) und/oder eines hinter dem zumindest einen Flüssigkeitsauslass (5a-5e) angeordneten Druckreglers (27b) der Anlage (1).

## Claims

1. Installation (1) for preparing drinking water (1), having a fluid inlet (3) and at least one fluid outlet (5a-5e),
wherein a pressure regulator (27b) is arranged upstream of the at least one fluid outlet (5a-5e) a pressure regulator (27a) and/or downstream of the at least one fluid outlet (5a-5e),
a sterilisation device (7) for sterilising drinking water, wherein the sterilisation device (7) is connected in a fluid-conducting manner to the fluid inlet (3) and the at least one fluid outlet (5a-5e), **characterised by**
a fluid circuit (9) in which the sterilisation device (7) is arranged, wherein the fluid circuit (9) has a mixing device (13), wherein the mixing device (13) comprises a mixing container (15) which has two container inlets (17a, 17b) and a container outlet (19), wherein a container inlet (17b) and the container outlet (19) are connected in a fluid-conducting manner to the fluid circuit (9) and a container inlet (17a) is connected in a fluid-conducting manner to the fluid inlet (3) of the installation (1), and wherein the at least one fluid outlet (5a-5e) is arranged inside the fluid circuit (9) and the fluid inlet (3) is arranged outside the fluid circuit (9), wherein the sterilisation device (7) is connected via the mixing device (13) in a fluid-conducting manner to the fluid inlet (3) so that the sterilisation device (7) sterilises a mixture of already prepared drinking water which circulates inside the fluid circuit (9) with drinking water which is still to be prepared and which is supplied via the fluid inlet (3) to the installation, wherein the sterilisation device (7) has one or more ultrasound generators which are configured to irradiate the mixture with ultrasound, and one or more radiation generators (25a-25c) which are configured to irradiate the mixture with ultraviolet radiation having a wavelength in the range from 156 to 300 nm, wherein the fluid inlet (3) is connected to the at least one fluid outlet (5a-5e) by means of a direct line (31), wherein a supply valve (21) is arranged between the fluid inlet (3) of the installation (1) and the mixing device (13), and
a pump (11) which is configured to convey fluid inside the installation (1) and which is arranged inside the fluid circuit (9), wherein the pump (11) is arranged between the at least one fluid outlet (5a-5e) and the mixing device (13) in order to pump the drinking water from the at least one fluid outlet (5a-5e) to the mixing device (13), wherein the pump (11) can be adjusted with regard to the volume and mass flow.

2. Installation (1) according to the preceding claim, **characterised in that** the sterilisation device (7) comprises a self-cleaning device.

3. Building, in particular for keeping animals, **characterised in that** the building has an installation (1) for preparing drinking water which is constructed according to either of the preceding claims.

4. Method for preparing drinking water by means of an installation (1) according to claim 1, having the following steps:
- conveying the drinking water by means of the pump (11) of the installation (1) inside the fluid circuit (9) from the at least one fluid outlet (5a-5e) of the installation (1) to the mixing device (13) of the installation (1), wherein the mixing device (13) comprises the mixing container (15), which has the two container inlets (17a, 17b) and the container outlet (19), wherein a container inlet (17b) and the container outlet (19) are connected in a fluid-conducting manner to the fluid circuit (9) and a container inlet (17a) is connected in a fluid-conducting manner to the fluid inlet (3) of the installation (1), wherein the pump (11) is arranged between the at least one fluid outlet (5a-5e) and the mixing device (13) and pumps the drinking water from the at least one fluid outlet (5a-5e) to the mixing device (13), wherein the pump (11) can be adjusted in terms of the volume and mass flow,
- mixing sterilised drinking water and non-sterilised drinking water in the mixing device (13) of the installation (1) inside the fluid circuit (9),
- sterilising drinking water by means of the sterilisation device (7) of the installation (1), wherein the sterilisation of the drinking water is carried out inside the fluid circuit (9) of the installation (1), wherein the sterilisation device (7) sterilises the mixture of already sterilised drinking water which circulates inside the fluid circuit (9) and non-sterilised drinking water which is supplied via the fluid inlet (3) to the installation, wherein the mixture is irradiated with ultrasound and with ultraviolet radiation having a wavelength in the range from 156 to 300 nm,
- controlling the pressure inside the fluid circuit (9) by means of a pressure regulator (27a) of the installation (1) which is arranged upstream of the at least one fluid outlet (5a-5e) and/or a pressure regulator (27b) of the installation (1) which is arranged downstream of the at least one fluid outlet (5a-5e).

## Revendications

1. Installation (1) de préparation d'eau potable, avec
une entrée de liquide (3) et au moins une sortie de liquide (5a - 5e), dans laquelle un régulateur de pression (27a) est disposé devant l'au moins une sortie de liquide (5a - 5e) et/ou un régulateur de pression (27b) est disposé après l'au moins une sortie de liquide (5a - 5e),
un appareil de stérilisation (7) servant à stériliser de l'eau potable, dans laquelle l'appareil de stérilisation (7) est relié en communication fluidique à l'entrée de liquide (3) et à l'au moins une sortie de liquide (5a - 5e), **caractérisée par**
un circuit de liquide (9), dans lequel l'appareil de stérilisation (7) est disposé, dans laquelle le circuit de liquide (9) présente un dispositif de mélange (13), dans laquelle le système de mélange (13) comprend un contenant de mélange (15), lequel présente deux entrées de contenant (17a, 17b) et une sortie de contenant (19), dans laquelle une entrée de contenant (17b) et la sortie de contenant (19) sont reliées en communication fluidique avec le circuit de liquide (9) et une entrée de contenant (17a) est reliée en communication fluidique avec l'entrée de liquide (3) de l'installation (1), et dans lequel l'au moins une sortie de liquide (5a - 5e) est disposée à l'intérieur du circuit de liquide (9) et l'entrée de liquide (3) est disposée à l'extérieur du circuit de liquide (9), dans laquelle l'appareil de stérilisation (7) est relié en communication fluidique à l'entrée de liquide (3) par l'intermédiaire du dispositif de mélange (13) de sorte que l'appareil de stérilisation (7) stérilise un mélange composé d'eau potable déjà préparée, laquelle circule à l'intérieur du circuit de liquide (9), avec de l'eau potable à préparer encore, laquelle est amenée à l'installation par l'entrée de liquide (3), dans laquelle l'appareil de stérilisation (7) présente un ou plusieurs générateurs d'ultrasons, lesquels sont mis au point pour irradier le mélange d'ultrasons, et un ou plusieurs générateurs de rayonnement (25a - 25c), lesquels sont mis au point pour irradier le mélange d'un rayonnement ultraviolet avec une longueur d'onde dans la plage de 156 à 300 nm, dans laquelle l'entrée de liquide (3) est reliée par l'intermédiaire d'un conduit direct (31) à l'au moins une sortie de liquide (5a - 5e), dans laquelle une soupape d'arrivée (21) est disposée entre l'entrée de liquide (3) de l'installation (1) et le dispositif de mélange (13), et
une pompe (11), laquelle est mise au point pour refouler du liquide à l'intérieur de l'installation (1), et est disposée à l'intérieur du circuit de liquide (9), dans laquelle la pompe (11) est disposée entre l'au moins une sortie de liquide (5a - 5e) et le dispositif de mélange (13) pour pomper l'eau potable provenant de l'au moins une sortie de liquide (5a - 5e) vers le dispositif de mélange (13), dans laquelle la pompe (11) peut être réglée eu égard au flux volumique et massique.

2. Installation (1) selon la revendication précédente,
**caractérisée en ce que** l'appareil de stérilisation (7) comprend un dispositif de nettoyage automatique.

3. Bâtiment, en particulier pour l'élevage, **caractérisé en ce que** le bâtiment présente une installation (1) servant à préparer de l'eau potable, laquelle est réalisée selon l'une quelconque des revendications précédentes.

4. Procédé servant à préparer de l'eau potable au moyen d'une installation (1) selon la revendication 1, avec des étapes suivantes :
- de refoulement de l'eau potable au moyen de la pompe (11) de l'installation (1) à l'intérieur du circuit de liquide (9) depuis l'au moins une sortie de liquide (5a - 5e) de l'installation (1) vers le dispositif de mélange (13) de l'installation (1), dans lequel le dispositif de mélange (13) comprend le contenant de mélange (15), lequel présente les deux entrées de contenant (17a, 17b) et la sortie de contenant (19), dans lequel une entrée de contenant (17b) et la sortie de contenant (19) sont reliées en communication fluidique au circuit de liquide (9) et une entrée de contenant (17a) est reliée en communication fluidique à l'entrée de liquide (3) de l'installation (1), dans lequel la pompe (11) est disposée entre l'au moins une sortie de liquide (5a - 5e) et le dispositif de mélange (13) et pompe l'eau potable provenant de l'au moins une sortie de liquide (5a - 5e) vers le dispositif de mélange (13), dans lequel la pompe (11) peut être réglée eu égard au flux volumique et au flux massique,
- de mélange d'eau potable stérilisée et d'eau potable non stérilisée dans le dispositif de mélange (13) de l'installation (1) à l'intérieur du circuit de liquide (9),
- de stérilisation d'eau potable au moyen de l'appareil de stérilisation (7) de l'installation (1), dans lequel la stérilisation de l'eau potable est effectuée à l'intérieur du circuit de liquide (9) de l'installation (1), dans lequel l'appareil de stérilisation (7) stérilise le mélange composé d'eau potable déjà stérilisée, laquelle circule à l'intérieur du circuit de liquide (9), et d'eau potable non stérilisée, laquelle est amenée par l'entrée de liquide (3) à l'installation, dans lequel le mélange est irradié d'ultrasons et d'un rayonnement ultraviolet avec une longueur d'onde dans la plage de 156 à 300 nm,
- de régulation de la pression à l'intérieur du circuit de liquide (9) au moyen d'un régulateur de pression (27a), disposé devant l'au moins une sortie de liquide (5a - 5e), de l'installation (1) et/ou d'un régulateur de pression (27b), disposé après l'au moins une sortie de liquide (5a - 5e), de l'installation (1).
